# EUROPÄISCHE PATENTSCHRIFT

(11) **EP 3 663 628 B1**
(45) Veröffentlichungstag und Bekanntmachung des Hinweises auf die Patenterteilung: **05.05.2021**
(21) Anmeldenummer: 19000537.1
(22) Anmeldetag: 28.11.2019
(51) Int. Cl.: F16M 11/04

(54) **VORRICHTUNG ZUR HALTERUNG EINES KAMERASYSTEMS AN BEWEGTEN OBJEKTEN**
DEVICE FOR FIXING A CAMERA SYSTEM TO MOVING OBJECTS
DISPOSITIF DE MAINTIEN D'UN SYSTÈME DE CAMÉRA SUR DES OBJETS EN MOUVEMENT

(30) Priorität: 06.12.2018 DE 102018009606
(43) Veröffentlichungstag der Anmeldung: 10.06.2020
(73) Patentinhaber: Fellinger, Mark, 83059 Kolbermoor (DE); Pecuch, Gabriel, 83059 Kolbermoor (DE)
(72) Erfinder: Fellinger, Mark, D - 83059 Kolbermoor (DE); Pecuch, Gabriel, D - 83059 Kolbermoor (DE)
(74) Vertreter: Zinken-Sommer, Rainer

(56) Entgegenhaltungen:
- EP-A1- 3 176 489
- DE-A1- 10 310 459

## Beschreibung

Die Erfindung betrifft eine Vorrichtung zur Halterung eines Kamerasystems, vorzugsweise einer Halterung zur Anbringung des Kamerasystems an bewegten Objekten, wobei die Halterung als Dämpfungselement an den bewegten Objekten befestigt ist.

Für das Herstellen von Film-, Fernseh-, Video- oder Werbeaufnahmen ist es notwendig, die verwendeten Kameras auf Halterungen oder Stativköpfen zu befestigen, die in mehreren Achsen verschwenkbar sind.

Eine Schwenk- und Nickfunktion ist dabei ein bekannter Stand der Technik (zum Beispiel EP3176489A1). Das Einbeziehen einer dritten Achse (Rollachse) ist ebenfalls bekannt, erfordert allerdings einen hohen technischen Aufwand zur Herstellung und dem Betrieb derartiger Vorrichtungen.

Das Verschwenken der Halterungssysteme inklusive der Kameras kann dabei manuell als auch mittels verschiedener Motorantriebe durchgeführt werden. Üblicherweise werden hierfür Schrittmotoren verwendet, die über eine Rotationswelle und eine Steuerschaltung zum Steuern der Schwenk-/Kippfunktion verwendet werden. Das Verwenden von Impulszählern ist ebenfalls als bekannt anzusehen.

Aus der DE 102 48 023 A1 ist ein derartiges Schwenk-/Kipp-Kamerasystem bekannt.

Die DE 102 08 413 B4 beschreibt einen schwenkbaren Stativkopf für eine Kamera, der um mindestens eine Achse mit Hilfe eines Motorantriebes verschwenkbar ist und eine Aufnahme für die Kamera aufweist, wobei der Stativkopf aus Elementen eines Bausatzes zusammengesetzt ist, nämlich Motorantriebsmodulen mit einem Motorgehäuse sowie einer Abtriebswelle und das Motorgehäuse Befestigungseinrichtungen zur Verbindung des Motorgehäuses mit einem weiteren Element aufweist. Dabei kommen biegefeste gerade Stäbe mit Klemmelementen zum Einsatz.

Ebenfalls bekannt ist ein Kamerahalter für Fahrzeuge mit einer Vibrationsdämpfung, wobei ein oder mehrere Gas- oder Öldruckstoßdämpfer mit Federn oder Federelementen zur Vibrationsdämpfung in einem scharnierförmigen Halter gegenüber einem Scharnierdrehpunkt angeordnet sind (DE 20 2013 007 276 U1). Aus der US 7,209,176 B2 ist eine in Hollywood-Studios verwendete Kamerahalterung bekannt, die mehrfachgelenkig über eine obere Aufnahme an einer Kamera befestigt ist.

Die DE 10 2006 014 441 B4 beschreibt eine Verstellvorrichtung, die zur ferngesteuerten oder unmittelbaren Verstellung von Aggregaten, wie Lichtquellen oder Kameras verwendet werden kann.

Sie weist zwei Schwenkachsen und zwei Motoreinheiten mit Microschrittmotoren auf und ist getriebelos aufgebaut.

Die EP 2 416 202 A1 beschreibt ein Kamerastabilisierungssystem mit 360° Drehachse.

Aus der EP 1 887 274 A1 ist ein Kamerakopf bekannt, der über einen Tragarm mit vertikaler Drehvorrichtung verfügt, wobei an der Drehvorrichtung hängend eine nach unten offene U-förmige Aufnahme angebracht ist, die an ihren seitlichen Armen eine Schwenkvorrichtung aufweist, die ebenfalls U-förmig ausgeführt ist und auf ihrem horizontalen Verbindungssteg eine beweglich Kamerahalterung besitzt.

Die EP 2 759 480 A1 beschreibt einen zweiachsigen und einen dreiachsigen Kugelkopf für einen Einsatz in einem kleinen unbemannten Fluggerät, insbesondere einem Helikopter. Beide Ausführungsformen weisen eine Maschinenrahmen-Anordnung mit verschiedenen Rahmen auf, die ineinander geführt sind oder eingreifen. Im inneren Rahmen ist eine Kameraaufnahme angeordnet, die über eine U-förmige Aufnahme (Bügel) eine vertikale Neigungsverstellung der Mini-Kamera (GoPro) zuläßt. Eine horizontale Verstellbarkeit der Mini-Kamera ist damit nicht möglich. An der U-förmigen Aufnahme ist zentral eine weitere Halterung als Kragarm angeordnet, die eine Drehbewegung ausführen kann. Am anderen Ende des Kargarms befindet sich eine vierte Halterung, die wiederum U-förmig ausgeführt ist und eine weitere Drehbewegung zuläßt. Mit dieser Halterung ist die Vorrichtung am Fluggerät befestigt. Insgesamt weist die gesamte Vorrichtung drei Antriebe auf.

Die Vorrichtung ist für High-Speed-Aufnahmen ungeeignet, da sie über keinen Verwackelschutz verfügt. Als Kameratechnik ist nur eine Mini-Kamera (GoPro) einsetzbar und keine professionelle High-Speed-Kamera. Die gesamte Leichtbau-Konstruktion ist vorzugsweise auf die Verwendung in Mini-Helikoptern (Drohnen) ausgelegt. Eine geschlossene Doppelkäfig-Ausführung ist realisiert. In der US 2010/0079101 A1 wird eine Kamera-Halterung beschrieben, die an einem Auo befestigt werden kann und ein Stabilisierungssystem aufweist. Die Vorrichtung ist vorzugsweise als offene Kipp-Dreh-Einrichtung ausgeführt, in deren oberer U-förmiger Halterung eine Kamera über eine schwalbenschwanzförmige Aufnahme geführt ist. Sie ist damit als offene Dreifach-Rahmenkonstruktion ausgeführt. Die schwalbenschwanzförmige Kameraaufnahme stützt sich über ein zentrales Kipp-Gelenk auf dem horizontalen Schenkel des oberen U-förmigen Rahmens ab und kann im beschränkten Umfang seitlich gekippt werden. Des Weiteren wird eine Ausführungsform beschrieben, die einen Dreifach-Rahmen aufweist. Auch diese Ausführungsform weist keinen wirksamen Verwackelschutz für High-Speed-Aufnahmen auf. Es handelt sich lediglich um eine einfache Haltevorrichtung für Amateur-Video-Aufnahmen ohne professionellen Hintergrund.

Die EP 0 966 154 A1 beschreibt eine Methode und ein Equipment für dreiachsig bewegliche Aufnahmen. Es handelt sich in diesem Sinne um ein dreiachsiges Fernbedienungssystem für eine Kamera mit einem Joy-Stick als Steuerelement und einer Datenleitung zur Kamera. Unterhalb der Kamera - zwischen dieser und dem Kameraständer - ist eine in drei Achsen bewegliche Kameraführung angeordnet, wobei jede Bewegungsrichtung über einen Zahn-/Keilriemenantrieb erreicht wird. Auch diese gegen Verwackeln ungeschützte Vorrichtung ist für professionelle High-Speed-Aufnahmen vollkommen ungeeignet.

Alle bekannten Kamerahalterungen weisen folgende Nachteile auf:
1. Eine dreidimensionale Beweglichkeit ist entweder gar nicht oder nur technisch sehr aufwendig und teuer realisierbar.
2. Es entstehen Vibrationen an der Halterung, die die Kamera und damit die Aufnahmequalität erheblich beeinflussen.
3. Aufgrund der technisch aufwendigen Konstruktionen sind die Halterungen nur mit großem Aufwand zu transportieren und zusätzlich empfindlich gegen Transportschäden.
4. Es sind teure Versicherungen notwendig.
5. Aufgrund der hohen Herstellungskosten existieren nur eine sehr begrenzte Anzahl an derartigen Halterungen, die teuer gekauft oder geleast werden müssen.
6. Die meisten Halterungen sind nicht oder nur bedingt und aufwendig an Fahrzeugen oder Flugkörpern oder Booten anzubringen und erfüllen dann in unzureichender Art die notwendigen Anforderungen zur sicheren Befestigung.
7. Die bekannten professionellen Halterungen für bewegliche Aufnahmen weisen ein sehr hohes Eigengewicht auf.
8. Die bekannten Halterungen weisen nicht die gleiche Stabilität, eine unzureichende Vibrations- und Schwingungsdämpfung sowie ungenügende flexiblen Anbringungsmöglichkeiten auf.

Der Erfindung liegt die Aufgabe zugrunde, eine Halterung für vorzugsweise bewegliche Kameraaufnahmen bereitzustellen, die sicher und einfach an beweglichen Objekten zu befestigen ist und auch bei hohen Geschwindigkeiten sowie im Off-Road-Bereich, eine sehr gute vibrationsarme Aufnahmequalität ermöglicht.

Die Erfindung löst die Aufgabe dadurch, dass
die Halterung einen als doppeltes Parallelogramm ausgeführten Grundkörper aufweist,
- wobei der Grundkörper an seinen beiden Seiten jeweils zwei seitliche Bügel besitzt, zwischen denen diagonal zwei Wellen und an den jeweiligen Enden der Bügel zwei brückenförmig ausgebildete Abstandshalter angeordnet sind und die seitlichen Bügel an beiden Abstandshaltern jeweils über Drehgelenke befestigt sind,
- wobei zwischen zwei Drehgelenken der Abstandshalter ein an den Wellen diagonal gelenkig angeordneter Schlitten befestigt ist, der auf Führungen zwischen den brückenförmigen Abstandshaltern längsbeweglich ausgeführt ist und neben der mindestens einen Feder mindestens eine zweigeteilte Wirbelstrombremse aufweist, deren beide Teile gleitend ineinander geführt sind,
- wobei an einem der brückenförmigen Abstandshalter eine Befestigung zur Fixierung am beweglichen Objekt und am anderen der brückenförmigen Abstandshalter ein Kragarm zur Aufnahme des Kamerasystems angeordnet ist.

Der untere Teil der Wirbelstrombremse ist dabei am Schlitten über eine Halterung abgehangen, wobei die Abhängung abgewinkelt ausgeführt ist.

Am unteren Teil der mindestens einen Wirbelstrombremse sind an deren Unterbodenbereich die Steuerung und mindestens ein Antrieb befestigt, sodass beide Teile der Wirbelstrombremse höhen- und längsverstellbar gleitend ineinander geführt sind.

Die mindestens eine Feder ist über eine Spindel oder dergleichen einstellbar ausgeführt ist. Durch die Verstellung der Feder, die als Spiral- oder Gasdruckfeder ausgeführt sein kann, wird abgesichert, dass der optimale Arbeitsbereich der Halterung exakt in einer waagerechten Position erreicht wird.

Im bewegten Zustand und auf verschiedenen Untergründen erfolgt das waagerechte Feintuning und eine weiche Dämpfung des Kamerasystems über die Steuerung durch eine Veränderung der Eindringtiefe und der Längsverschiebung der beiden Teile der Magneten am Schlitten.

Mittels beidseitig an den Außenseiten der Wirbelstrombremse angeordneter Abschirmplatten erfolgt eine Abschirmung des Magnetfeldes, sodass empfindliche Geräte (Handys) keinen Schaden nehmen können.

Der Kragarm ist drehbar ausgeführt, sodass das Kamerasystem entweder auf der Oberseite des waagerechten Teils des Kragarms oder auf der Unterseite des waagerechten Teils des Kragarms befestigt werden kann.

### Vorteile der Erfindung

- durch die erfindungsgemäße Konstruktion des Grundkörpers der Halterung als doppeltes Parallelogramm in käfigartiger Ausführung, ist es möglich, ein Dämpfungssystem in dessen Inneren anzuordnen, wodurch die gesamte Konstruktion mehrfach gelenkig jede Bewegung des Kamerasystems auf jedem Untergrund sowie bei wechselnden Geschwindigkeiten ausschwingen kann
- die erfindungsgemäße Anbringung des Schlittens auf zwei zwischen den jeweiligen beiden seitlichen Bügeln diagonal angeordneten Wellen gewährleistet, dass der zweigeteilte Schlitten längsverschieblich ausgeführt werden kann
- mittels der einstellbaren Federn kann das Kamerasystem an der Halterung exakt waagerecht ausgerichtet und federnd gelagert werden
- die zweigeteilte Ausführung der Wirbelstrombremse auf zwei längs- und höhenbeweglichen Schlittenteilen gewährleistet, dass die Magneten gleitend ineinander geführt werden können
- durch die erfindungsgemäße Steuerung wird abgesichert, dass in kürzester Zeit eine der jeweiligen Gegebenheit angepasste Dämpfung der Konstruktion in den waagerechten Arbeitsbereich erfolgen kann, indem die Magneten der Wirbelstrombremse sich entweder tiefer oder weniger tief und längsverschieblich auf den Führungen des Schlittens ineinander bewegen können, sodass ein Feintuning stattfindet
- die Aufnahmequalität des Kamerasystems ist durch die erfindungsgemäße Lösung extrem verwackel- sowie schwingungs- und vibrationsfrei
- das Kamerasystem ist dabei nach einer kaum wahrnehmbaren Dämpfung stets in waagerechter Position
- es entstehen Outdoor-Aufnahmen von sich schnell bewegenden Land-, Luft- und Wasser-Fahrzeugen von bestechender Qualität
- dabei ist die Konstruktion so gewählt, dass stets eine hohe Stabilität und Dauerbeständigkeit bei vertretbaren Kosten gewährleistet ist
- die Halterung lässt sich problemlos an jedem Fahrzeug über Bügel, Streben, Schellen oder Saugnäpfe befestigen

### Liste der verwendeten Bezugszeichen

1 - Grundkörper
2 - Bügel
3 - Bügel
4 - Bügel
5 - Bügel
6 - Welle
7 - Welle
8 - Abstandshalter
9 - Abstandshalter
10 - Drehgelenk
11 - Drehgelenk
12 - Drehgelenk
13 - Drehgelenk
14 - Drehgelenk
15 - Drehgelenk
16 - Drehgelenk
17 - Drehgelenk
18 - Schlitten
19 - Führung
20 - Führung
21 - Feder
22 - Wirbelstrombremse
23 - oberer Teil
24 - unterer Teil
25 - Kragarm
26 - Halterung
27 - Steuerung
28 - Antrieb
29 - Abschirmplatte
30 - Abschirmplatte
31 - Spindel

### Ausführungsbeispiel

Die Erfindung soll nachstehend anhand eines Ausführungsbeispiels näher erläutert werden.

Dabei zeigen:
- Figur 1 - die Halterung in 3-D-Ansicht schräg von hinten
- Figur 2 - die Halterung in 3-D-Ansicht schräg von vorn
- Figur 3 - die Halterung in der Seitenansicht
- Figur 4 - den zweigeteilten Schlitten in 3-D-Ansicht schräg von vorn
- Figur 5 - den Schlitten in der Seitenansicht
- Figur 6 - einen brückenförmigen Abstandshalter in 3-D-Ansicht
- Figur 7 - einen brückenförmigen Abstandshalter in 3-D-Ansicht
- Figur 8 - den Kragarm in 3-D-Ansicht
- Figur 9 - das entstehende Magnetfeld der Wirbelstrombremse
- Figur 10 - den Schlitten mit Steuerung und Antrieb von unten

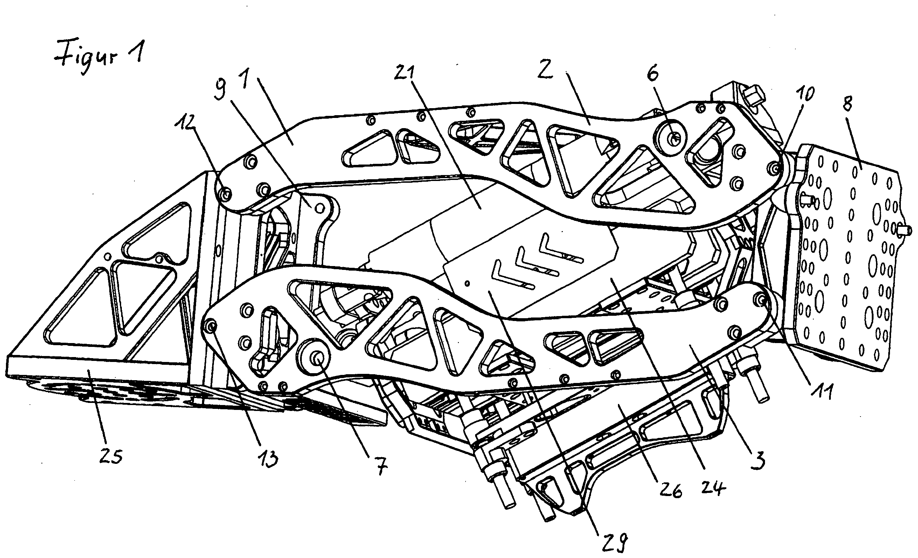

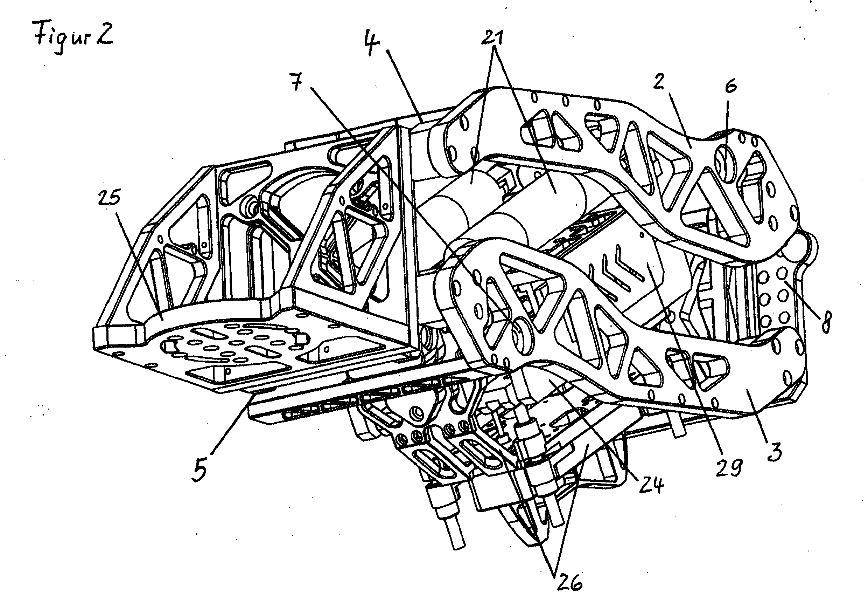

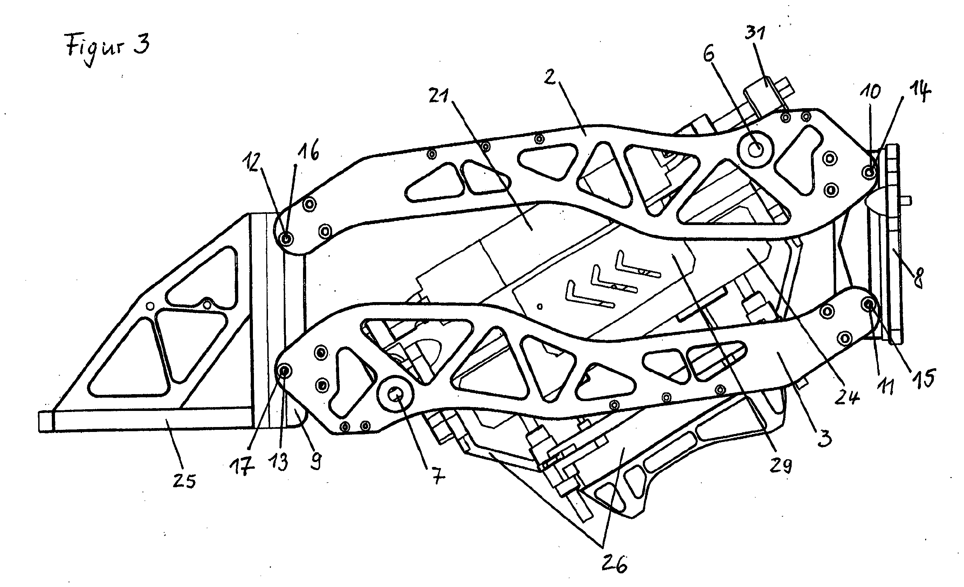

Die Vorrichtung zur Halterung eines Kamerasystems an bewegten Objekten weist einen als doppeltes Parallelogramm ausgeführten Grundkörper 1 auf, der sich aus an seinen beiden Seiten jeweils zwei Bügeln 2; 3 und 4; 5 sowie aus den zwei brückenförmigen Abstandshaltern 8; 9 zusammensetzt, wobei die Bügel 2; 3; 4; 5 jeweils an beiden Abstandshaltern 8; 9 über die Drehgelenke 10; 11; 12; 13; 14; 15; 16; 17 beweglich befestigt sind (Figur 1, 2, 3).

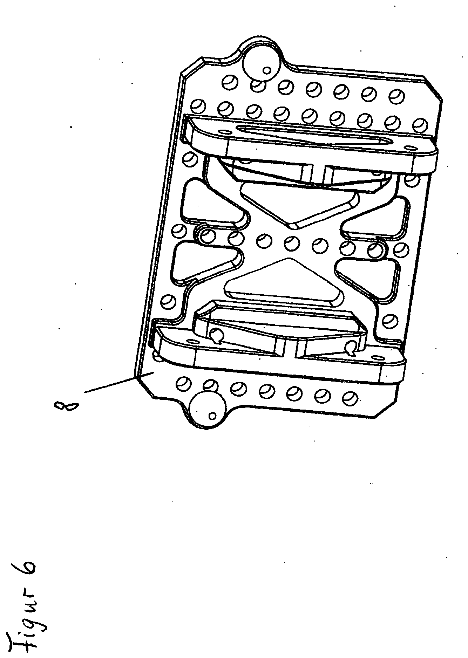

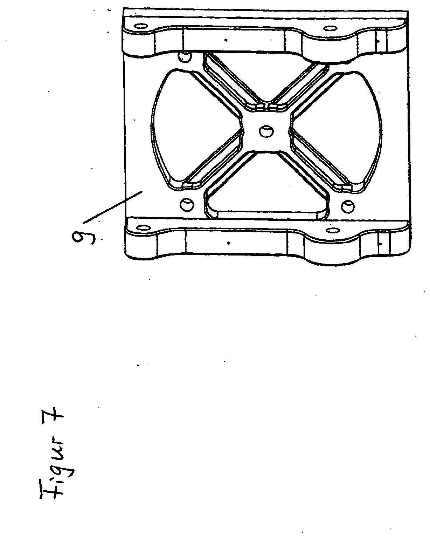

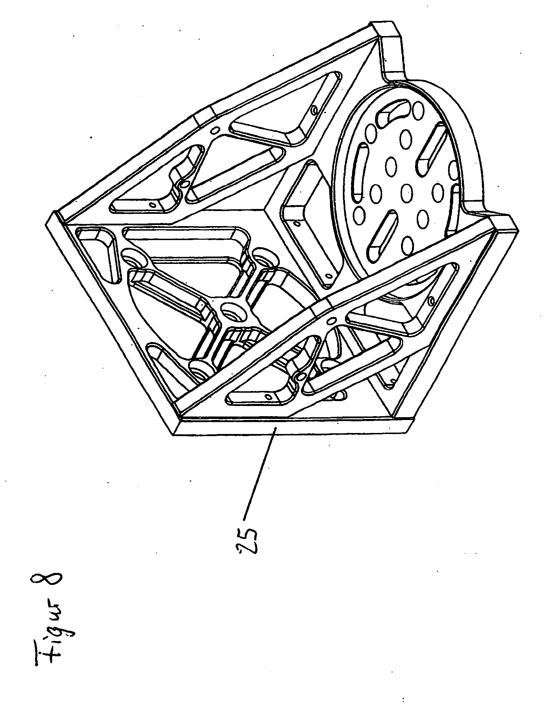

Dabei ist am Abstandshalter 9 der drehbar ausgeführte Kragarm 25 zur Befestigung des Kamerasystems und am Abstandshalter 8 Vorrichtungen zur Anbringung an einem Fahrzeug befestigt (Figur 6, 7, 8).

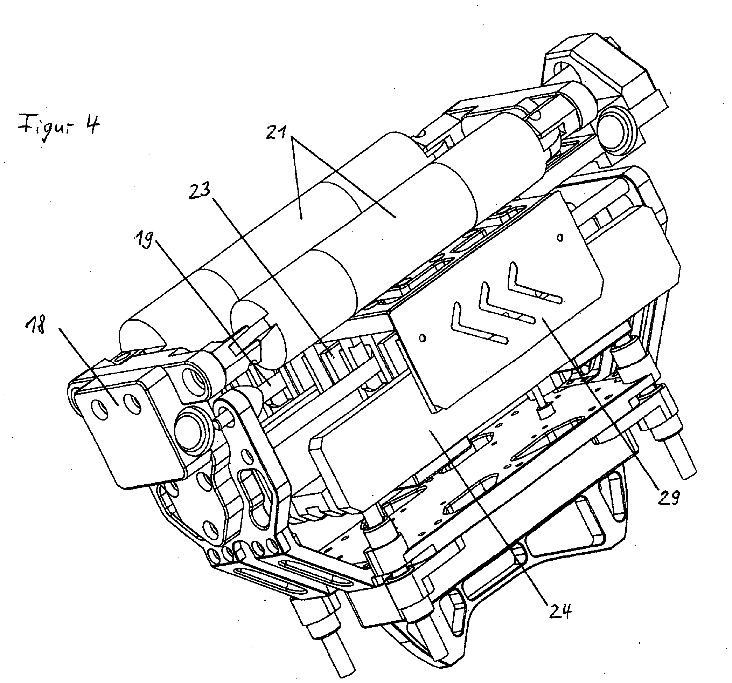

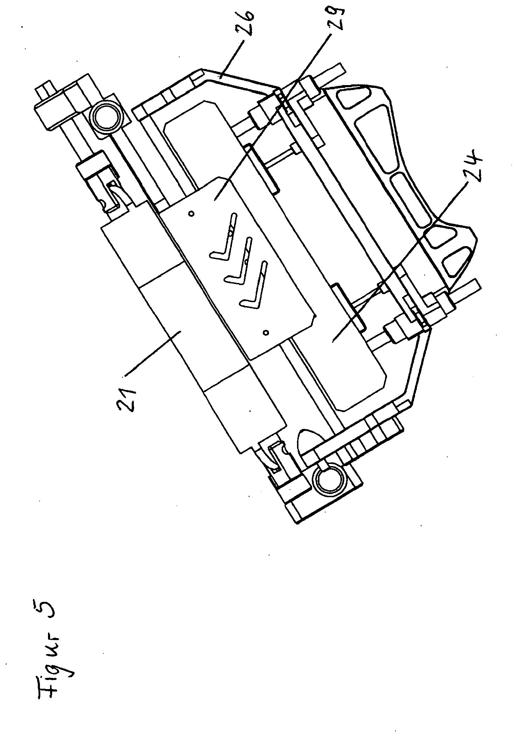

Zwischen den Bügeln 2; 3; 4; 5 sind diagonal zwei Wellen zur Lagerung des Schlittens 18 angebracht, der die Führungen 19; 20 aufweist, auf denen sich die beiden Teile 23; 24 der Wirbelstrombremse 22 längsseitig bewegen können (Figur 4, 5).

Dabei ist der untere Teil 24 der Wirbelstrombremse 22 über die Halterung 26 höherverstellbar abgehangen.

Die im oberen Bereich des Schlittens 18 in Längsrichtung eingespannten Feder(n) 21 sichern über eine spindelförmige Verstellmöglichkeit ab, dass sich die gesamte Halterung mit dem Kamerasystem in einer waagerechten Position befindet, ohne dass die Wirbelstrombremse 22 eingeschaltet ist.

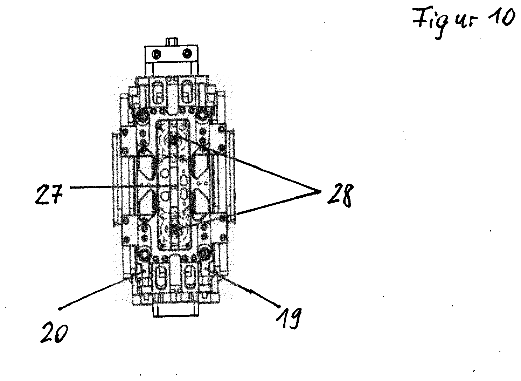

An der Halterung 26 des unteren Teiles 24 der Wirbelstrombremse 22 ist die Steuerung 27 und mindestens ein Antrieb 28 befestigt (Figur 10). Die Steuerung 27 und der Antrieb 28 sichern ab, dass über die Längsverstellung des Schlittens 18 auf den Führungen 19; 20 sowie die Höhenverstellung des unteren Teiles 24 der Wirbelstrombremse 22 in den oberen Teil 23 der Wirbelstrombremse 22 hinein oder heraus ein Feintuning der gesamten Halterung inklusive des Kamerasystems in der Waagerechten bei einer Bewegung des Fahrzeuges auf jedem Untergrund stattfinden kann.

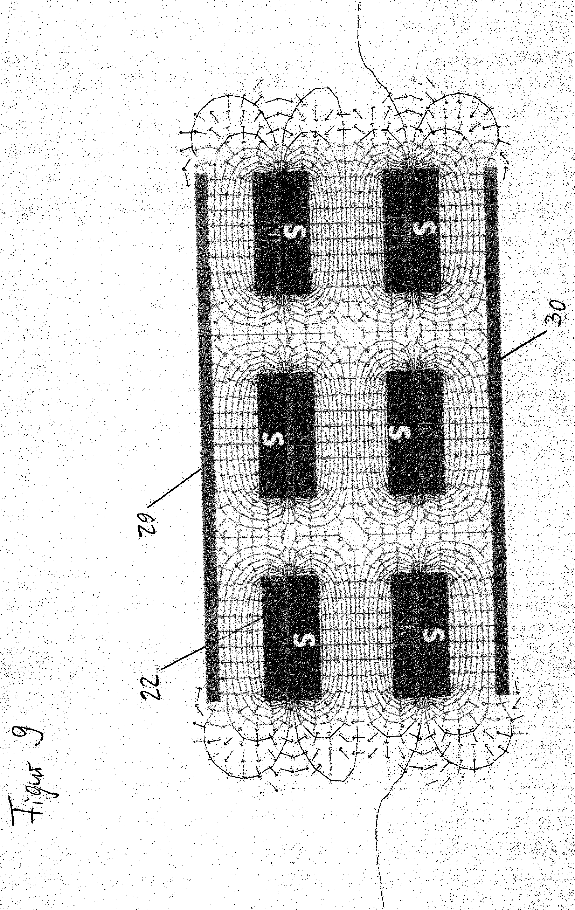

Zum Schutz vor Schädigungen von Handys durch austretende Magnetfeldern aus der Wirbelstrombremse 22 ist an deren Längsseiten jeweils eine Abschirmplatte 29; 30 befestigt (Figur 9).

## Patentansprüche

1. Vorrichtung zur Halterung eines Kamerasystems an bewegten Objekten, wobei die Halterung als Dämpfungselement an den bewegten Objekten befestigt ist und mindestens eine Feder sowie eine Steuerung und einen Antrieb aufweist,
wobei die Halterung einen als doppeltes Parallelogramm ausgeführten Grundkörper (1) aufweist,
• wobei der Grundkörper (1) an seinen beiden Seiten jeweils zwei seitliche Bügel (2; 3; 4; 5) besitzt, zwischen denen diagonal zwei Wellen (6; 7) und an den jeweiligen Enden der Bügel (2; 3; 4; 5) zwei brückenförmig ausgebildete Abstandshalter (8; 9) angeordnet sind und die seitlichen Bügel (2; 3; 4, 5) an beiden Abstandshaltern (8; 9) jeweils über Drehgelenke (10; 11; 12; 13; 14; 15; 16; 17) befestigt sind,
• **dadurch gekennzeichnet, dass** zwischen den Drehgelenken (10; 11; 12; 13; 14; 15; 16; 17) der Abstandshalter (8; 9) ein an den Wellen (6; 7) diagonalgelenkig angeordneter Schlitten (18) befestigt ist, der auf Führungen (19; 20) zwischen den brückenförmigen Abstandshaltern (8; 9) längsbeweglich ausgeführt ist und neben der mindestens einen Feder (21) mindestens eine zweigeteilte Wirbelstrombremse (22) aufweist, deren beide Teile (23; 24) gleitend ineinander geführt sind,
• wobei an einem der brückenförmigen Abstandshalter (8) eine Befestigung zur Fixierung am beweglichen Objekt und am anderen der brückenförmigen Abstandshalter (9) ein Kragarm (25) zur Aufnahme des Kamerasystems angeordnet ist.

2. Vorrichtung nach Anspruch 1, ***gekennzeichnet dadurch, dass*** der untere Teil (24) der Wirbelstrombremse (22) am Schlitten (18) über eine Halterung (26) abgehangen ausgeführt ist.

3. Vorrichtung nach Ansprüchen 1 und 2, ***gekennzeichnet dadurch, dass*** am unteren Teil (24) der Wirbelstrombremse (22) die Steuerung (27) und mindestens ein Antrieb (28) befestigt sind.

4. Vorrichtung nach Ansprüchen 1 bis 3, ***gekennzeichnet dadurch, dass*** beide Teile (23; 24) der Wirbelstrombremse (22) längsverstellbar ineinander geführt sind.

5. Vorrichtung nach Ansprüchen 1 bis 4, ***gekennzeichnet dadurch, dass*** beide Teile (23; 24) der Wirbelstrombremse (22) höhenstellbar ineinander geführt sind.

6. Vorrichtung nach Anspruch 1, ***gekennzeichnet dadurch, dass*** die mindestens eine Feder (21) über eine Spindel (31) oder dergleichen einstellbar ausgeführt ist.

7. Vorrichtung nach Anspruch 1, ***gekennzeichnet dadurch, dass*** der Kragarm (25) drehbar ausgeführt ist.

8. Vorrichtung nach Ansprüchen 1 bis 5, ***gekennzeichnet dadurch, dass*** an den beiden Längsseiten der Wirbelstrombremse (22) jeweils eine Abschirmplatte (29; 30) angeordnet ist.

## Claims

1. A device for mounting a camera system on moving objects, wherein the mounting is fastened on the moving objects as a damping element and comprises at least one spring as well as a controller und a drive,
• wherein the mounting comprises a basic body (1) realised as a double parallelogram,
• wherein the basic body (1), on its two sides, has two lateral brackets (2; 3; 4; 5) each, between which two shafts (6; 7) are diagonally arranged and the respective ends of the brackets (2; 3; 4; 5) have two bridge-shaped distance pieces (8; 9) arranged on them and the lateral brackets (2; 3; 4, 5) are fastened to the two distance pieces (8; 9) via rotary joints (10; 11; 12; 13; 14; 15; 16; 17) respectively,
***characterised in that***
• a diagonally articulated slide (18) is fastened to the shafts (6; 7) between the rotary joints (10; 11; 12; 13; 14; 15; 16; 17) of the distance pieces (8; 9), the slide being realised so as to be longitudinally movable on guides (19; 20) between the bridge-shaped distances pieces (8; 9) and comprising, apart from the at least one spring (21), at least one two-part eddy current brake (22), the two parts (23; 24) of which are guided so as to slide into each other,
• wherein one of the bridge-shaped distances pieces (8) has a mount for fixing on the moving object and the other of the bridge-shaped distance pieces (9) has a cantilever arm (25) for receiving the camera system arranged on it.

2. The device according to claim 1, ***characterised in that*** the lower part (24) of the eddy current brake (22) is realised on the slide (18) so as to be suspended therefrom via a mounting (26).

3. The device according to claims 1 and 2, ***characterised in that*** the controller (27) and at least one drive (28) are fastened to the lower part (24) of the eddy current brake (22).

4. The device according to claims 1 to 3, ***characterised in that*** both parts (23; 24) of the eddy current brake (22) are guided into each other in a length-adjustable manner.

5. The device according to claims 1 to 4, ***characterised in that*** both parts (23; 24) of the eddy current brake (22) are guided into each other in a height-adjustable manner.

6. The device according to claim 1, ***characterised in that*** the at least one spring (21) is designed so as to be adjustable via a spindle (31) or similar.

7. The device according to claim 1, ***characterised in that*** the cantilever arm (25) is designed so as to be rotatable.

8. The device according to claims 1 to 5, ***characterised in that*** a shielding plate (29; 30) is arranged on each of the two longitudinal sides of the eddy current brake (22).

## Revendications

1. Dispositif de support d'un système de caméra à des objets mobiles, sachant que le support est fixé aux objets mobiles en tant qu'élément d'amortissement et comporte au moins un ressort ainsi qu'une commande et un système d'entraînement,
• sachant que la fixation comporte un corps de base (1) exécuté comme un parallélogramme double,
• sachant que le corps de base (1) possède sur ses deux côtés respectivement deux étriers latéraux (2 ; 3 ; 4 ; 5), entre lesquels sont disposés en diagonale deux arbres (6 ; 7) et aux extrémités respectives des étriers (2 ; 3 ; 4 ; 5), deux supports d'écartement constitués en forme de pontage (8 ; 9) et les étriers latéraux (2 ; 3 ; 4 ; 5) sont fixés respectivement aux deux supports d'écartement (8; 9) par des articulations (10 ; 11 ; 12 ; 13 ; 14 ; 15 ; 16 ; 17),
***caractérisé en ce qu'***
• entre les articulations (10; 11 ; 12 ; 13; 14 ; 15; 16; 17) des supports d'écartement (8 ; 9) est fixé un coulisseau (18) disposé de façon articulée en diagonale sur les arbres (6 ; 7), qui est exécuté longitudinalement mobile sur des glissières (19 ; 20) entre les supports d'écartement en forme de pontage (8 ; 9) et comporte à côté d'au moins un ressort (21), au moins un frein à courant de Foucault divisé en deux (22), dont les deux parties (23 ; 24) sont guidées coulissant l'une dans l'autre,
• sachant que sur un des supports d'écartement en forme de pontage (8), est disposé un système de fixation pour la fixation à l'objet mobile et sur l'autre support d'écartement en forme de pontage (9), un bras en porte-à-faux (25) pour loger le système de caméra.

2. Dispositif selon la revendication 1, ***caractérisé en ce que*** la partie inférieure (24) du frein à courant de Foucault (22) est exécuté sur le coulisseau (18) suspendu par un support (26).

3. Dispositif selon les revendications 1 et 2, ***caractérisé en ce que*** sur la partie inférieure (24) du frein à courant de Foucault (22), sont disposés la commande (27) et au moins un système d'entraînement (28).

4. Dispositif selon les revendications 1 à 3, ***caractérisé en ce que*** les deux parties (23 ; 24) du frein à courant de Foucault (22) sont guidées l'une dans l'autre réglables en longueur.

5. Dispositif selon les revendications 1 à 4, ***caractérisé en ce que*** les deux parties (23 ; 24) du frein à courant de Foucault (22) sont guidées l'une dans l'autre réglables en hauteur.

6. Dispositif selon la revendication 1, ***caractérisé en ce qu***'au moins un ressort (21) est exécuté réglable par une broche (31) ou un élément analogue.

7. Dispositif selon la revendication 1, ***caractérisé en ce que* le** bras en porte-à-faux (25) est exécuté pouvant tourner.

8. Dispositif selon les revendications 1 à 5, ***caractérisé en ce qu'***une plaque de protection (29 ; 30) est respectivement disposée sur les deux côtés longitudinaux du frein à courant de Foucault (22).
